# EUROPEAN PATENT SPECIFICATION

(11) **EP 0 626 690 B1**
(45) Date of publication and mention of the grant of the patent: **05.08.1998**
(21) Application number: 94108221.6
(22) Date of filing: 27.05.1994
(51) Int. Cl.: G11B 27/10, G11B 20/10, G11B 19/02

(54) **Digital audio disk player**
Plattenspieler für digitale Tonsignale
Lecteur de disques numériques audio

(30) Priority: 28.05.1993 JP 148310/93
(43) Date of publication of application: 30.11.1994
(73) Proprietor: KABUSHIKI KAISHA KENWOOD, Shibuya-ku Tokyo (JP)
(72) Inventor: Sasaki, Toshihiro, Musashimurayama-shi, Tokyo (JP)
(74) Representative: Patentanwälte Leinweber & Zimmermann

(56) References cited:
- EP-A- 0 419 009
- EP-A- 0 516 342
- PATENT ABSTRACTS OF JAPAN vol. 17, no. 438 (P-1591) 12 August 1993 & JP-A-05 089 646
- PATENT ABSTRACTS OF JAPAN vol. 14, no. 317 (P-1073) 9 July 1990 & JP-A-02 101 691
- PATENT ABSTRACTS OF JAPAN vol. 16, no. 96 (P-1322) 10 March 1992 & JP-A-03 273 586
- PATENT ABSTRACTS OF JAPAN vol. 15, no. 382 (P-1257) 26 September 1991 & JP-A-03 150 765

## Description

### BACKGROUND OF THE INVENTION

### Field of the Invention

The present invention relates to a digital audio disk player, and more particularly to a digital audio disk player capable of outputting audio data without intermitting it in a scan play.

### Related Background Art

In this specification, the term "scan play" means to sequentially reproduce music numbers each being faded in at the center position thereof and faded out after a predetermined time period, e.g., after 20 seconds.

In the scan play of a conventional digital audio disk player, the center position of a music number is detected from music number position information recorded on a digital audio disk and the music number is reproduced for 20 seconds starting from the center thereof. Reproducing a music number continues during the time period from a fade-in to a fade-out, and the next music number is reproduced by searching the center position thereof. Such reproduction is repeated while the scan play is instructed.

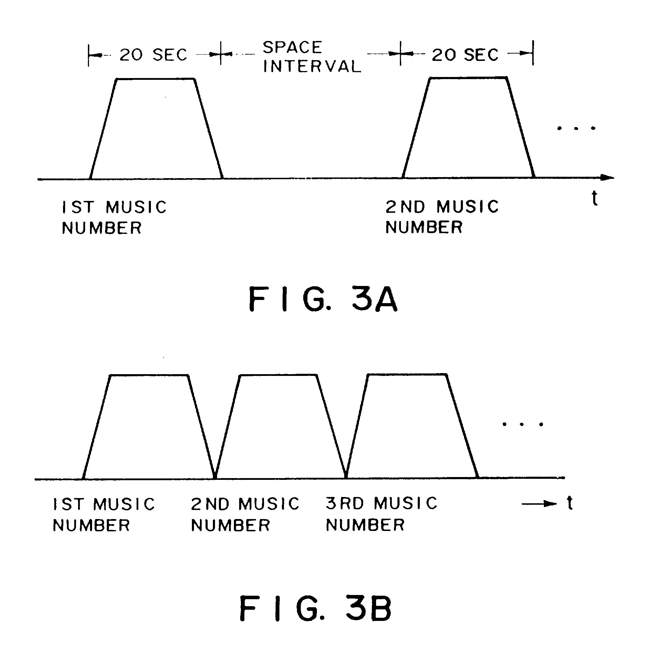

As shown in Fig.3A, in the scan play of a conventional digital audio disk player, there is a space interval of several seconds between the reproduced two consecutive music numbers because it takes a time to search the center position of the succeeding music number. EP-A-0 419 009 discloses an example of such a disk player.

### SUMMARY OF THE INVENTION

It is an object of the present invention to provide a digital audio disk player capable of removing the space interval between reproduced two consecutive music numbers in the scan play.

According to one aspect of the present invention, there is provided a digital audio disk player with a scan play function for reproducing each music number during a predetermined time period starting from a searched center of the music number, the digital audio disk player including: storage means for storing processed digital audio data; read/write control means responsive to a scan play instruction for writing the digital audio data of each music number starting from a searched center into the storage means at a speed higher than the normal reproducing speed, and for reading the digital audio data of the music number starting from the searched center from the storage means at a speed corresponding to the normal reproducing speed, the amount of the read digital audio data corresponding to the digital audio data to be reproduced during the predetermined time period; and search start timing control means for controlling to start the search of the center of a succeeding music number at the timing before the completion of reproducing the preceding music number so as to make the search of the succeeding music number complete when the reproduction of the preceding music number completes.

The read/write control means of a digital audio disk player inhibits data write when a predetermined amount of digital audio data is written in the storage means during data read, and starts data write when a predetermined amount of digital audio data is read from the storage means.

According to a digital audio disk player of this invention, digital audio data is stored in and read from the storage means during the scan play. The read data is sent to a succeeding stage to perform the scan play. In the scan play, the search of the center position of a succeeding music number completes at the same time when the reproduction of the preceding music number completes. Accordingly, there is no space interval between two consecutive music plays so that music numbers can be reproduced continuously in the scan play.

It is noted that from JP-A-3 150 765 a digital audio disk player is known per se having storage means for storing processed digital audio data and read/write control means for writing the digital audio data of each music number at a speed higher than the normal reproducing speed, and for reading the digital audio data of the music number at a speed corresponding to the normal reproducing speed.

### BRIEF DESCRIPTION OF THE DRAWINGS

Fig.1 is a block diagram showing the structure of a digital audio disk player according to an embodiment of the present invention.

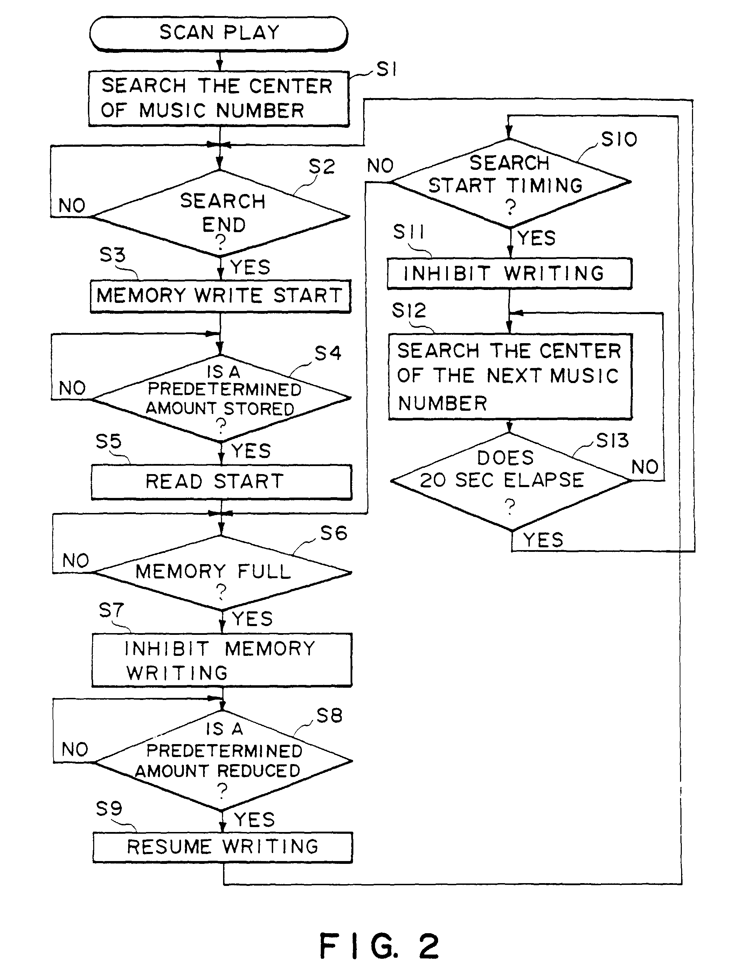

Fig.2 is a flow chart explaining the operation of the embodiment shown in Fig.1.

Figs.3A and 3B are schematic diagrams explaining music number reproduction in the scan player of the embodiment player, as compared to music number reproduction of a conventional player.

### DETAILED DESCRIPTION OF THE PREFERRED EMBODIMENTS

An embodiment of the present invention will be described with reference to the accompanying drawings.

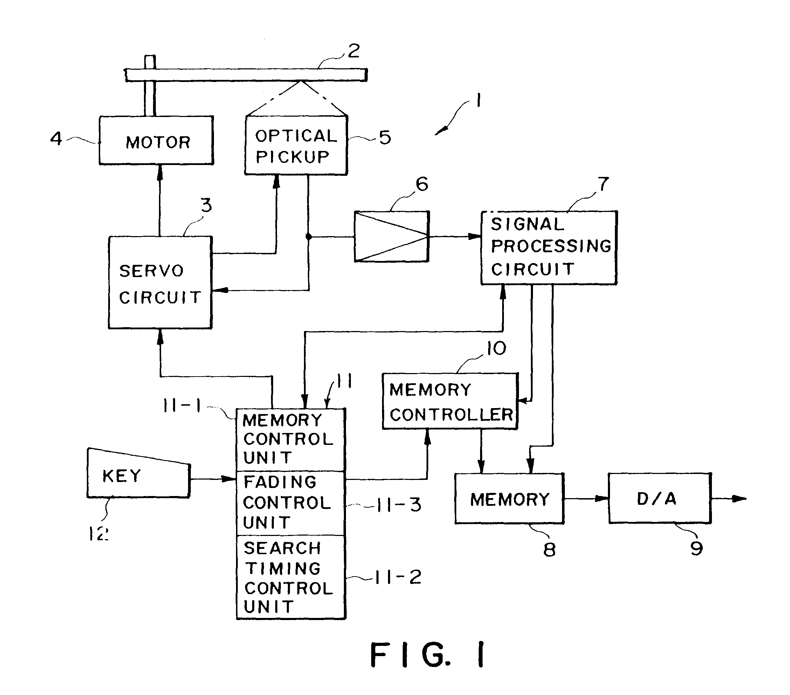

Fig.1 is a block diagram showing the structure of a digital audio disk player according to the embodiment of the invention.

Reference numeral 1 generally represents a digital audio disk player according to the embodiment of this invention. A digital audio disk 2 is rotated by a motor 4 under the control of a servo circuit 3. Record information is read from the rotating digital audio disk 2 by an optical pickup 5. Of the record information read by the optical pickup 5, focussing information, tracking information, and the like are supplied to the servo circuit 3 for the drive control of the motor 4 and for the position control of the pickup 5, to thereby control the position of the pickup 5 relative to the digital audio disk 2.

An RF signal read by the optical pickup 5 is amplified by a high frequency amplifier 6 and supplied to a signal processing circuit 7 which performs an EMF demodulation of the RF signal, error correction, and the like. The processed digital audio data is temporarily stored in a memory 8 at a speed equal to or higher than a speed corresponding to a normal reproducing speed under the control of the memory controller 10 (hereinafter this write speed is called a high speed), and thereafter read from the memory 8 at a speed corresponding to the normal reproducing speed and supplied to a D/A converter 9 which converts it into an analog signal.

The digital audio disk player 1 of this embodiment has a microcomputer 11 for controlling the player 1 and a keyboard 12 for externally supplying information to the microcomputer 11. The keyboard 12 has a scan play key for designating the scan play.

The microcomputer 11 controls the digital audio disk 2 to rotate it at a high speed during data write and to stop it during data write inhibition. The microcomputer 11 functionally has a memory control unit 11-1 which controls the memory controller 10 so that digital audio data is written into the memory 8 at the high speed and read therefrom at a speed corresponding to the normal reproducing speed.

The microcomputer 11 also functionally has a search timing control unit 11-2 and a fading control unit 11-3. During the scan play, the search timing control unit 11-2 controls to start searching the center of a succeeding music number at a predetermined timing before the completion of reproducing the preceding music number so that the search of the succeeding music number is completed when reproducing the preceding music number is completed. The fading control unit 11-3 controls a low frequency stage (not shown) to execute fade-in and fade-out operations.

When the scan play is designated by the scan play key of the keyboard 12, the center of a music number is searched (Step S1). When the center of the music number is searched (Step S2), data write to the memory 8 starts (Step S3). Upon the start of the data write at Step S3, digital audio data is written in the memory 8 at the high speed until a predetermined amount of digital audio data is stored in the memory 8 (Step S4).

If it is judged at Step S4 that a predetermined amount of digital audio data has been stored, reading the digital audio data starts (Step S5). In this case, there is a time delay between the data write start and data read start. This delay is not sensed, however, by a listener because it is very short. At Step S5, the digital audio data is read from the memory 8 at a speed corresponding to the normal reproducing speed. During this data read, data write continues. Because data is written at the high speed, the amount of digital audio data stored in the memory 8 equilibrates with the amount of read data or gradually increases, during the data read.

It is checked after Step S5 whether the memory 8 becomes full of digital audio data (Step S6). If the memory 8 becomes full, writing digital audio data to the memory 8 is inhibited (Step S7). Even if data write is inhibited, the data read continues. It is checked after Step S7 whether the amount of digital audio data in the memory 8 has reduced by a predetermined amount (Step S8). If reduced, writing digital audio data to the memory 8 starts again (Step S9).

Although reading digital data from the memory 8 continues during the execution of Step S9, the amount of digital audio data in the memory 8 gradually increases because of the re-start of data write. It is checked after Step S9 whether it is a search start timing or not (Step S10). The search start timing is set to a timing of about 3 seconds before the fade-out of the present music number so that the search of the center of the next music number is completed at the fade-out of the present music number. If it is judged at Step S10 that it is the search start timing, data write to the memory 8 is inhibited (Step S11).

The search of the center of the next music number starts after Step S11 (Step S12) and continues until 20 seconds lapse from the timing of the data read at Step S5 (Step S13). If it is judged at Step S13 that 20 seconds had just lapsed, then the control returns to Step S2. At this Step S2, the center of the next music number has already been searched so that the control advances to Step S3.

Because the data read and write speeds are predetermined, the amount of digital audio data written during the period from Step S3 to S7 and the period from Step S9 to S11 is substantially equal to the amount of digital audio data required for the data reproduction during 20 seconds. The reproducing operation starts by a fade-in at Step S5 and ends by a fade-out at Step 13 after 20 seconds.

The search of the center of a succeeding music number is executed in an overlap manner before the reproduction of the preceding music number is completed. Accordingly, as shown in Fig.3B, the scan play of the succeeding music number can be performed immediately after the completion of the scan play of the preceding music number, without any space interval therebetween. The above operation continues until the scan play designation is terminated.

As described so far, according to the digital audio disk player of this invention, the search of the center of a succeeding music number is completed when the scan play of the preceding music number is completed. As a result, music numbers can be reproduced continuously without any space interval between two consecutive music numbers.

## Claims

1. A digital audio disk player with a scan play function for reproducing each music number during a predetermined time period starting from a searched center of the music number, comprising:
storage means (8) for storing processed digital audio data;
read/write control means (10, 11) responsive to a scan play instruction for writing the digital audio data of each music number starting from a searched center into said storage means at a speed higher than the normal reproducing speed, and for reading said digital audio data of said music number starting from said searched center from said storage means at a speed corresponding to the normal reproducing speed, the amount of said read digital audio data corresponding to the digital audio data to be reproduced during the predetermined time period; and
search start timing control means (11-2) for controlling to start the search of the center of a succeeding music number at the timing before the completion of reproducing the preceding music number so as to make the search of said succeeding music number complete when the reproduction of said preceding music number completes.

2. A digital audio disk player according to claim 1, wherein said read/write control means inhibits data write when a predetermined amount of digital audio data is written in said storage means during data read, and starts data write when a predetermined amount of digital audio data is read from said storage means.

## Patentansprüche

1. Digitaler Audioplattenspieler mit einer Anspielfunktion zur Wiedergabe jedes Musikstückes während einer vorbestimmten Zeitdauer beginnend von einer aufgesuchten Mitte des Musikstückes, umfassend:
eine Speichereinrichtung (8) zum Speichern von verarbeiteten digitalen Audiodaten;
eine Lese/Schreibsteuereinrichtung (10, 11) ansprechend auf einen Anspielbefehl zum Schreiben der digitalen Audiodaten jedes Musikstückes beginnend von einer aufgesuchten Mitte in die Speichereinrichtung mit einer Geschwindigkeit, die höher ist als die normale Wiedergabegeschwindigkeit, und zum Lesen der digitalen Audiodaten des Musikstückes, beginnend von der aufgesuchten Mitte, aus der Speichereinrichtung mit einer Geschwindigkeit, die der normalen Wiedergabegeschwindigkeit entspricht, wobei die Menge der gelesenen digitalen Audiodaten den digitalen Audiodaten entspricht, die während der vorbestimmten Zeitdauer wiederzugeben sind; und
eine Suchbeginnzeitsteuereinrichtung (11-2) zum Steuern des Beginns der Suche der Mitte eines nachfolgenden Musikstückes zu einer Zeit vor der Vollendung der Wiedergabe des vorangehenden Musikstückes, um so die Suche des nachfolgenden Musikstückes zu vollenden, wenn die Wiedergabe des vorangehenden Musikstückes vollendet wird.

2. Digitaler Audioplattenspieler nach Anspruch 1, bei welchem die Lese/Schreibsteuereinrichtung das Datenschreiben hemmt, wenn während des Datenlesens eine vorbestimmte Menge von digitalen Audiodaten in die Speichereinrichtung geschrieben ist, und das Datenschreiben beginnt, wenn eine vorbestimmte Menge von digitalen Audiodaten aus der Speichereinrichtung gelesen ist.

## Revendications

1. Lecteur de disque audio numérique à fonction de lecture de balayage pour reproduire chaque numéro de musique pendant une période de temps prédéterminée démarrant à partir d'un centre recherché du numéro de musique, comprenant :
un moyen de mémorisation (8) pour mémoriser des données audio numériques traitées ;
un moyen de contrôle lecture/écriture (10, 11) répondant à une instruction de lecture de balayage pour écrire les données audio numériques de chaque numéro de musique démarrant à partir d'un centre recherché dans ledit moyen de mémorisation à une vitesse supérieure à la vitesse de reproduction normale et pour lire lesdites données audio numériques dudit numéro de musique démarrant à partir dudit centre recherché dudit moyen de mémorisation à une vitesse correspondant à la vitesse de reproduction normale, la quantité desdites données audio numériques lues correspondant aux données audio numériques à reproduire pendant la période de temps prédéterminée ; et
un moyen de contrôle de synchronisation de départ de recherche (11-2) pour commander le départ de la recherche du centre d'un numéro de musique suivant au moment avant l'achèvement de reproduction du numéro de musique précédent afin d'effectuer la recherche dudit numéro de musique suivant complet lorsque la reproduction dudit numéro de musique précédent est accomplie.

2. Lecteur de disque audio numérique selon la revendication 1, dans lequel le moyen de contrôle de lecture/écriture précité inhibe l'écriture de données lorsqu'une quantité prédéterminée de données audio numériques est écrite dans le moyen de mémorisation précité pendant la lecture des données et démarre l'écriture des données lorsqu'une quantité prédéterminée de données audio numériques est lue dudit moyen de mémorisation.
